(19) Europäisches Patentamt
European Patent Office
Office européen des brevets

(11) EP 0 707 134 B1

(12) **EUROPÄISCHE PATENTSCHRIFT**

(45) Veröffentlichungstag und Bekanntmachung des Hinweises auf die Patenterteilung:
**16.07.1997 Patentblatt 1997/29**

(51) Int Cl.[6]: **E21B 43/22**

(21) Anmeldenummer: **95115319.6**

(22) Anmeldetag: **28.09.1995**

(54) **Verfahren zur Förderung von Erdöl**

Method of oil recovery

Procédé d'extraction de pétrole

(84) Benannte Vertragsstaaten:
**DE GB**

(30) Priorität: **29.09.1994 DE 4434880**

(43) Veröffentlichungstag der Anmeldung:
**17.04.1996 Patentblatt 1996/16**

(73) Patentinhaber: **Wacker-Chemie GmbH**
**81737 München (DE)**

(72) Erfinder:
- **Burger, Willibald, Dr.**
  **D-84489 Burghausen (DE)**
- **Huber, Peter, Dr.**
  **D-84489 Burghausen (DE)**
- **Meschkov, Piotr**
  **109391 Moskau (RU)**
- **Goussev, Serguei V.**
  **625016 Tjumen (RU)**
- **Mazajev, Vladimir V.**
  **625008 Tjumen (RU)**
- **Koval, Jaroslav G.**
  **625022 Tjumen (RU)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 150 718** **CA-A- 2 093 505**
**DE-A- 2 057 056** **US-A- 4 296 812**

- **DATABASE WPI Section Ch, Week 9312 Derwent Publications Ltd., London, GB; Class A97, AN 93-098785 & SU-A-1 724 859 ( GIPROVOSTOKNEFT DES INST) , 7.April 1992**
- **DATABASE WPI Section Ch, Week 9235 Derwent Publications Ltd., London, GB; Class A97, AN 92-290721 & SU-A-1 680 958 ( GIPROVOSTOKNEFT INST) , 30.September 1991**

EP 0 707 134 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Verfahren zur Förderung von Erdöl aus erdölhaltigen Lagerstätten, bei dem eine Organopolysiloxanemulsion eingesetzt wird.

Bei den meisten erdölhaltigen Lagerstätten wird das Erdöl aufgrund des in der Lagerstätte vorherrschenden Drukkes aus den Bohrlöchern befördert. Wenn der natürliche Druck zur Erdölgewinnung nicht ausreicht, werden Hilfsmittel, wie Wasser, Wasser-Tensid-Gemische oder Gase in die Lagerstätte gepumpt, um den Druck zu erhöhen und/oder das Erdöl aus den erdölführenden Schichten zu verdrängen.

Aus US-A-4,197,912 ist ein Verfahren zur Förderung von Erdöl aus erdölhaltigen Lagerstätten bekannt, bei dem Organosiloxane in Kohlenwasserstoffen gelöst oder dispergiert werden und diese Lösung oder Dispersion zur Erhöhung der Fördermenge in ein Bohrloch gepumpt wird. Die Handhabung großer Mengen an Kohlenwasserstoffen am Bohrloch ist aufgrund der niedrigen Flammpunkte und Dampfdrucke der geeigneten Kohlenwasserstoffe gefährlich. Bei ausgedehnten Lagerstätten und bei geringem Erdolgehalt der Lagerstätten ist der Einsatz der erforderlichen Kohlenwasserstoffmengen unwirtschaftlich.

Weiterhin sind Verfahren zur Förderung von Erdöl aus erdölhaltigen Lagerstätten beschrieben, bei dem eine wäßrige Tensidlösung in eine Injektionsbohrung eingepreßt wird. Dabei soll sich in der Lagerstätte eine Front der Tensidlösung ausbilden, die das Erdöl in Richtung einer Förderbohrung herschiebt. Die dabei gebildete Mischung aus Wasser, Tensid und Erdöl wird durch eine Förderbohrung gefördert. Ein derartiges Verfahren ist in US-A-4,296,812 beschrieben. Die wäßrige Tensidlösung enthält Siliciumdioxid-Dialkylsiloxan in einer Konzentration, die erheblich geringer ist als die Konzentration der Tenside. Ein ähnliches Verfahren ist aus US-A-4,230,182 bekannt. Dort wird ein tensidhaltiges Fluid eingepreßt, welches aus einer wäßrigen, das Tensid enthaltenden Phase und einer diskontinuierlichen Kohlenwasserstoffphase, die bis zu 15 Gew.-% einer öllöslichen Siliconverbindung enthält, besteht.

Bei den vorstehenden Verfahren ist jedoch der Erdölverdrängungswirkungsgrad unbefriedigend. Der Erdölverdrängungswirkungsgrad gibt den Anteil des aus dem Gestein verdrängten und geförderten Erdöls gegenüber dem gesamten im Gestein enthaltenen Erdöl an.

Die Lagerstätten bestehen in der Praxis aus Schichten mit unterschiedlichen Durchlässigkeiten für die wäßrige Tensidlösung. Es kann sich keine Front aus Tensidlösung ausbilden. Stattdessen fließt viel Tensidlösung durch die durchlässigeren Schichten schnell zur Förderbohrung. Der Erdölgehalt der geförderten Mischung aus Wasser, Tensid und Erdöl ist dann häufig so gering, daß eine Aufarbeitung nicht mehr wirtschaftlich ist.

In der SU-A 1 680 958 ist eine wäßrige Zusammensetzung zur Erdölgewinnung beschrieben, die Polyacrylamid, polyfunktionelle siliciumorganische Verbindung und nichtionisches Tensid enthält.

In der SU-A-1 724 859 ist eine wäßrige Zusammensetzung zur Erdölgewinnung beschrieben, welche als wasserlösliches Polymer Polyacrylamid oder Carboxymethylcellulose, Bichromat, nichtionisches Tensid, siliciumorganische Verbindung und Salz- oder Schwefelsäure enthält.

Die wasserlöslichen Polymere Polyacrylamid oder Carboxymethylcellulose erhöhen die Viskosität der Emulsionen. Diese Emulsionen sind zur Verdrängung von Erdöl aus durchlässigen Gesteinsschichten mit weiten Poren geeignet. Enge Poren verstopfen sehr schnell. Bei Lagerstätten mit Schichten verschiedener Porenweite fließt deshalb viel Emulsion durch die durchlässigeren Schichten zur Förderbohrung und andere Gesteinschichten verstopfen. Wie vorstehend beschrieben, ist dann der Erdölgehalt der geförderten Mischung häufig zu gering.

Es bestand daher die Aufgabe, ein Verfahren zur Förderung von Erdöl aus erdölhaltigen Lagerstätten bereitzustellen, das einen hohen Erdölverdrängungswirkungsgrad und einen hohen Erdölgehalt der geförderten Mischung aufweist.

Die Erfindung betrifft ein Verfahren zur Förderung von Erdöl aus erdölhaltigen ( Lagerstätten,
bei dem eine Emulsion, enthaltend die Komponenten

A) 100 Gewichtsteile Organopolysiloxan
B) 10 bis 100 Gewichtsteile Tensid,
C) Wasser und gegebenenfalls
D) bis zu 20 Gewichtsteile Füllstoff, der ausgewählt wird aus hydrophilen und hydrophoben Oxiden von Silicium, Magnesium oder Zink, Salzen von Elementen der II. oder III. Gruppe des Periodensystems nach Mendelejeff mit einer Ordnungszahl von 12 bis 30 mit 12 bis 22 Kohlenstoffatome je Molekül aufweisenden, aliphatischen einbasigen Carbonsäuren oder Hydroxycarbonsäuren, Lithiumstearat, Magnesiumsilikat und Magnesiumaluminiumsilikat

eingesetzt wird,
wobei die Anwesenheit von Polyacrylamid und Carboxymethylcellulose ausgeschlossen ist.

Bei dem erfindungsgemäßen Verfahren werden Tenside (B) nur in einer solchen Menge eingesetzt, um Organopolysiloxan (A) und gegebenenfalls Zusatzstoffe (D) in Emulsion zu halten.

Das Organopolysiloxan (A) weist eine geringe Oberflächenspannung, gute Verteilbarkeit im Gestein der erdölhaltigen Lagerstätten, gute Benetzbarkeit des erdölhaltigen Gesteins und chemische Inaktivität gegenüber den in den Lagerstätten vorhandenen Gesteinen, dem Erdöl und den bei der Förderung verwendeten Wirkstoffen auf. Auch übt das Organopolysiloxan (A) einen positiven Einfluß auf Prozesse der Erdölaufbereitung, beispielsweise schaumhemmende Wirkung aus. Insbesondere ist das Organopolysiloxan (A) temperaturstabil bei häufig in Lagerstätten vorherrschenden Temperaturen von 70°C und wesentlich darüber, wie in den Erdölfeldern von Westsibirien.

Vorzugsweise ist das Organopolysiloxan (A) aus Einheiten der allgemeinen Formeln (I) bis (VII)

$$R_3SiO_{1/2} \qquad (I),$$

$$R_2SiO \qquad (II),$$

$$RSiO_{3/2} \qquad (III),$$

$$SiO_{4/2} \qquad (IV),$$

$$R_2(R'O)SiO_{1/2} \qquad (V),$$

$$R(R'O)SiO \qquad (VI),$$

$$R'OSiO_{3/2} \qquad (VII),$$

aufgebaut, worin

**R** einwertige, gegebenenfalls mit Halogenatomen, Cyano-, Amino-, Alkylamino-, quarternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 18 Kohlenstoffatomen,

**R'** einwertige, gegebenenfalls mit Halogenatomen, Cyano-, Amino-, Alkylamino-, quarternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 30 Kohlenstoffatomen und Wasserstoffatome bedeuten.

Beispiele für Kohlenwasserstoffreste **R** und **R'** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl-, Allyl- und der 5-Hexen-1-ylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Reste R und R' sind Cyanalkylreste, wie der β-Cyanethylrest, und mit Fluor, Chlor oder Bromatomen halogenierte Kohlenwasserstoffreste, beispielsweise Halogenalkylreste, wie der 3,3,3 -Trifluor-n-propylrest, der 2,2,2,2',2',2'-Hexafluorisopropylrest, der Heptafluorisopropylrest, und Halogenarylreste, wie der o-, m- und p-Chlorphenylrest.

Vorzugsweise sind mindestens 90 Mol-% der Reste R Methyl-, Ethyl- oder Phenylreste, insbesondere Methylreste.

Beispiele für die durch Polyoxyalkylengruppen substituierten Reste R und R' sind die Reste der allgemeinen Formel (VIII)

$$-R^1-[O\,(CR^2_2)\,)_c]_dOR^2 \qquad (VIII),$$

in der

$R^1$ einen zweiwertigen $C_1$- bis $C_6$-Alkylenrest,
$R^2$ Wasserstoffatome oder einwertige $C_1$- bis $C_6$-Kohlenwasserstoffreste,
c die Werte 0, 1, 2, 3, 4 oder 5, vorzugsweise 2 oder 3 und
d ganzzahlige Werte von 1 bis 100, vorzugsweise 1 bis 10 bedeuten.

Beispiele für die zweiwertigen Reste $R^1$ sind gesättigte gerad- oder verzweigtkettige oder cyclische Alkylenreste wie der Methylen- und Ethylenrest sowie Propylen-, Butylen-, Pentylen-, Hexylen-, 2-Methylpropylen-, Cyclohexylenreste, oder ungesättigte Alkylenreste wie der Propenylen- und Hexenylenrest.

Beispiele für die einwertigen Reste $R^2$ sind bei den vorstehenden Beispielen für R und R' aufgeführt.

Weitere Beispiele für die durch Polyoxyalkylengruppen substituierten Reste R und R'sind die Reste der allgemeinen Formel (IX)

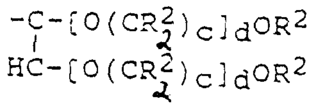

(IX),

worin $R^2$, c und d die vorstehend für die allgemeine Formel (VIII) angegebenen Bedeutungen aufweisen.

Vorzugsweise weisen höchstens 5 Mol-% der Einheiten des Organopolysiloxans (A) die allgemeinen Formeln (V) bis (VII) auf.

Vorzugsweise enthält das Organopolysiloxan (A) mindestens 50 Gew.-%, insbesondere mindestens 80 Gew.-% Organopolysiloxane (A1), welche zu mindestens 90 Mol-%, insbesondere 95 Mol-% aus Einheiten der allgemeinen Formel (II) bestehen. Dabei weisen vorzugsweise mindestens 50 Mol-% der restlichen Einheiten die allgemeinen Formeln (I) und (V) auf. Weiterhin ist bevorzugt, daß Organopolysiloxan (A1) eine durchschnittliche Viskosität von 50 bis 500 000 mPa.s, insbesondere von 350 bis 60 000 mPa.s bei 25°C aufweist.

Vorzugsweise enthält das Organopolysiloxan (A) mindestens 0,5 Gew.-%, insbesondere mindestens 1 Gew.-% und vorzugsweise höchstens 20 Gew.-% Organopolysiloxanharze (A2), welche zu mindestens 90 Mol-%, insbesondere 95 Mol-% aus Einheiten der allgemeinen Formeln (I), (IV) und (V) bestehen. Beispielsweise können die Organopolysiloxanharze (A2) bei temperatur fest sein und O,25 bis 1,25 Einheiten der allgemeinen Formel (I) pro Einheit der allgemeinen Formel (IV) aufweisen.
Diese bevorzugten Organopolysiloxanharze (A2) können, bedingt durch ihre Herstellung, bis zu insgesamt 5 Gew.-% Si-gebundene Alkoxyreste oder Hydroxylgruppen enthalten. Die Organopolysiloxanharze (A2) sind in der Regel mit Polydimethylsiloxanen nicht vollständig mischbar.

Obwohl in den allgemeinen Formeln (I) bis (III) nicht aufgeführt, kann ein Teil der Reste **R** durch direkt an Siliciumatome gebundene Wasserstoffatome ersetzt sein. Dies ist aber nicht bevorzugt.

Vorzugsweise wird das Tensid (B) ausgewählt unter den nachstehenden Tensiden:

1. Alkylsulfate, beispielsweise mit einer Kettenlänge von 8 - 18 C-Atomen, Alkylethersulfate mit 8 - 18 C-Atomen im hydrophoben Rest und 1 - 40 Ethylenoxid(EO)- bzw. Propylenoxid(PO)-Einheiten.
2. Sulfonate, z.B. Alkylsulfonate mit 8 - 18 C-Atomen, Alkylarylsulfonate mit 8 - 18 C-Atomen, Ester und Halbester der Sulfobernsteinsäure mit einwertigen Alkoholen oder Alkylphenolen mit 4 - 15 C-Atomen; gegebenenfalls können diese Alkohole oder Alkylphenole auch mit 1 - 40 EO-Einheiten ethoxyliert sein.
3. Alkali- und Ammoniumsalze von Carbonsäuren und Poly(alkylenglycol)ether-Carbonsäuren mit 8 - 20 C-Atomen im Alkyl-, Aryl-, Alkaryl- oder Aralkylrest und 1 - 40 EO- bzw. PO-Einheiten.
4. Phosphorsäureteilester und deren Alkali- und Ammoniumsalze, z.B. Alkyl- und Alkarylphosphate mit 8 - 20 C-Atomen im organischen Rest, Alkylether- bzw. Alkaryletherphosphate mit 8 - 20 C-Atomen im Alkyl- bzw. Alkarylrest und 1 - 40 EO-Einheiten.
5. Alkylpolyglycolether, vorzugsweise solche mit 2 - 40 EO-Einheiten und Alkylresten von 4 - 20 C-Atomen.
6. Alkylarylpolyglycolether mit 2 - 40 EO-Einheiten und 8 - 20 C-Atomen in den Alkyl- und Arylresten.
7. Ethylenoxid/Propylenoxid(EO/PO)-Blockcopolymere mit 8 - 40 EO- bzw. PO-Einheiten.
8. Fettsäurepolyglycolester mit 6 - 24 C-Atomen und 2 - 40 EO-Einheiten.
9. Alkylpolyglykoside der allgemeinen Formel R''-O-$Z_o$,worin R'' einen linearen oder verzweigten, gesättigten oder ungesättigten Alkylrest mit im Mittel 8 - 24 C-Atomen und $Z_o$ einen Oligoglykosidrest mit im Mittel o = 1 - 10 Hexose- oder Pentoseeinheiten oder Gemischen davon bedeuten.
10. Polare Gruppen enthaltende lineare Organopolysiloxane mit Alkoxygruppen und bis zu 24 C-Atomen und/oder

bis zu 40 EO- und/oder PO-Gruppen.

11. Salze von primären, sekundären und tertiären Fettaminen mit 8 - 24 C-Atomen mit Essigsäure, Schwefelsäure, Salzsäure und Phosphorsäuren.

12. Quarternäre Methylalkyl- und Methylalkylbenzylammoniumsalze, deren Alkylgruppen 6 - 24 C-Atome besitzen, insbesondere die Halogenide, Sulfate, Phosphate, Acetate und Hydroxide.

13. Alkylpyridinium-, Alkylimidazolinium- und Alkyloxazoliniumsalze, deren Alkylkette bis zu 18 C-Atome besitzt, speziell in Form ihrer Halogenide, Sulfate, Phosphate und Acetate.

Es kann ein Tensid, es können auch Gemische mehrerer Tenside eingesetzt werden.

Besonders bevorzugt als Tenside sind die oben unter 1,2,5,6, 7 und 8 aufgeführten Tenside, insbesondere die unter 1, 2, 6 und 7 aufgeführten Tenside.

Vorzugsweise werden auf 100 Gewichtsteile Organopolysiloxan (A) 30 bis 80 Gewichtsteile Tensid (B) eingesetzt.

Die als Füllstoffe (D) eingesetzten hydrophilen und hydrophoben Oxide von Silicium, Magnesium oder Zink weisen vorzugsweise jeweils eine Oberfläche von mindestens 50 $m^2/g$ auf. Besonders bevorzugt ist pyrogen erzeugtes oder gefälltes insbesondere hydrophobiertes Siliciumdioxyd mit einer Oberfläche von mindestens 50 $m^2/g$ (hochdisperse Kieselsäure).

Die Emulsionen können eine Art von Füllstoff oder Gemische aus mindestens zwei verschiedenen Arten von Füllstoffen enthalten. Der Anteil von Füllstoff beträgt bis zu 20 Gewichtsteile, insbesondere 2 bis 8 Gewichtsteile pro 100 Gewichtsteile Organopolysiloxan (A).

Als Zusatzstoffe (E) kann die Emulsion beispielsweise Fungizide, Bakterizide, Algicide, Biocide, Geruchsstoffe, Korrosionsinhibitoren, und, wenn auch nicht bevorzugt, organische Lösungsmittel enthalten.

Herstellungsbedingt können die Emulsionen geringe Anteile an organischen Lösungsmitteln enthalten. Insbesondere bei der Herstellung von Organopolysiloxanharzen werden häufig organische Lösungsmittel eingesetzt. Falls die Emulsion organische Lösungsmittel enthält, beträgt deren Anteil vorzugsweise höchstens 15 Gewichtsteile insbesondere höchstens 1 Gewichtsteil, bezogen auf 100 Gewichtsteile Organopolysiloxan (A).

Die Emulsionen können durch Vermischen ihrer Komponenten in beliebiger Reihenfolge hergestellt werden.

Die Summe der Komponenten Organopolysiloxan (A), Tenside (B), Füllstoff (D) und gegebenenfalls Zusatzstoffe (E) in der Emulsion beträgt vorzugsweise 0,01 bis 2 Gew.-%, insbesondere 0,05 bis 1 Gew.-%, bezogen auf das Gewicht der eingesetzten Emulsion.

In den nachfolgenden Beispielen sind, falls jeweils nicht anders angegeben,

a) alle Mengenangaben auf das Gewicht bezogen;

b) alle Drücke 0,10 MPa (abs.);

c) alle Temperaturen 20° C .

Beispiele

**Beispiel 1**

**Durchführung der Versuche:**

An einem Schichtmodell aus zwei gemahlenen Bohrkernen mit unterschiedlicher Durchlässigkeit aus einer erdölführenden Gesteinsschicht eines Erdölfeldes bei Tjumen in Westsibirien wird das erfindungsgemäße Verfahren erläutert.

Die Durchlässigkeit ist definiert als die Filtrationszeit eines bestimmten Gasvolumens durch die zu untersuchende Bohrkernprobe bei einem bestimmten Druckgradienten.

Mit dem gemahlenen Material der Bohrkerne mit unterschiedlicher Zusammensetzung werden zwei Kolonnen von gleicher Länge und gleichem Durchmesser gefüllt. Dann wird für jede Kolonne die Durchlässigkeit, bezogen auf Gas (absolute Durchlässigkeit) bestimmt. Über ein Einlaßrohr, das sich zu den beiden Kolonnen verzweigt, werden die Flüssigkeiten zugegeben. Die Enden der beiden Kolonnen sind zu einem Auslaßrohr zusammengeführt. Beide Kolonnen verfügen an den beiden Enden über Einrichtungen zur Messung der Durchflußgschwindigkeit. Das Modell wird auf eine Temperatur von 55°C thermostatisiert. Die Versuche werden bei einem Druck von 10 MPa durchgeführt.

Die Kolonnen werden zuerst mit Wasser gesättigt.

Anschließend werden die Kolonnen mit Erdöl aus dem vorstehenden Erdölfeld bei Tjumen gesättigt. Dazu wird etwa die 2-fache Menge des Porenvolumens des Schichtmodells benötigt. Danach wird wieder mit Wasser gespült. Wenn nahezu reines Wasser aus dem Auslaßrohr fließt, wird das Verhältnis der Durchflußgeschwindigkeiten in den

Kolonnen ermittelt. Je näher das Verhältnis bei 1 liegt, desto höher ist die Erdölausbeute.

Der Anteil des aus den Gesteinsmaterialien verdrängten Erdöls wird gemessen und mit der anfangs zur Sättigung der Kolonnen benötigten Erdölmenge verglichen. Der Erdölverdrängungswirkungsgrad gibt den Anteil des aus dem Gestein verdrängten Erdöls gegenüber dem gesamten im Gestein enthaltenen Erdöl an. Die zur Sättigung des Gesteins benötigte Erdölmenge wird als 100 % gesetzt.

Danach werden zuerst 20 % des Porenvolumens an Wirkstofflösung und anschließend so lange Wasser durch die Kolonne gespült, bis nahezu reines Wasser austritt.

Das Verhältnis der Durchflußgeschwindigkeiten in den Kolonnen wird erneut ermittelt.

Der Anteil des zusätzlich aus den Gesteinsmaterialien verdrängten Erdöls wird gemessen, als Zuwachs des Erdölverdrängungswirkungsgrads berechnet und zu dem vorstehenden verdrängungswirkungsgrad addiert.

Für einen weiteren Versuch mit einem anderen Wirkstoff werden die Kolonnen mit frischem Gesteinsmaterial gefüllt.

**Zusammensetzung der Wirkstofflösungen:**

Wirkstofflösung a

2,5 %ige, wäßrige Verdünnung von Extrakt 700, einer Siliconemulsion von Wacker-Chemie GmbH, München. Extrakt 700 besteht zu

- 9,5% aus einem Organopolysiloxan der Komponenten Polydimethylsiloxan der Viskosität 350 mPa-s Harz, bestehend aus $Me_3SiO_{1/2}$ und $SiO_{4/2}$-Einheiten $\alpha,\omega$-alkoxyfunktionelles Siliconöl

- 7% aus nichtionogen Tensiden (NOAS) folgender Zusammensetzung:
  4% einer Mischung von Estern eines mehrwertigen Alkohols mit einer Fettsäure
  3% ethoxylierte Fettalkohole

- 0,5 % hochdisperse Kieselsäure

- 83 % Wasser

Man gelangt somit zu einem Verhältnis Organopolysiloxan zu NOAS von 9,5:7 = 1,36

Wirkstofflösung b besteht zu:

1,25 % aus Extrakt 700 (siehe oben)
0,30 % aus WOF P-100, einem ethoxylierten Alkylphenol von Buna.
Es errechnet sich somit eine Organosiloxan / NOAS-Verhältnis von 0,31.

Wirkstofflösung c besteht zu

0,25 % aus Extrakt 700 (siehe oben)
0,40 % aus WOF P-100
Es errechnet sich somit ein Organosiloxan / NOAS-Verhältnis von 0,06.

In der nachstehenden Tabelle I sind die Ergebnisse aufgeführt:

Tabelle I

| | vor der Sättigung mit Erdöl | vor der Injektion der Wirkstofflösung | | |
|---|---|---|---|---|
| Versuch | Verhältnis der Durchlässigkeiten der Gesteinsproben | Verhältnis der Durchflußgeschwindigkeiten | Erdölverdrängungswirkungsgrad % | Verhältnis von Siloxan/NOAS in den Wirkstofflösungen |
| a | 2,93 | 3,68 | 51,6 | 1,36 |
| b | 3,06 | 4,25 | 54,9 | 0,31 |
| c | 2,90 | 3,50 | 53,7 | 0,06 |

nach der Injektion der Wirkstofflösung

| Versuch | Verhältnis der Durchflußgeschwindigkeit | Erdölverdrängungswirkungsgrad, % | Zuwachs des Verdrängungswirkungsgrades, % |
|---|---|---|---|
| a | 1,50 | 80,4 | 28,8 |
| b | 2,91 | 69,0 | 14,1 |
| c | 3,09 | 63,4 | 9,7 |

**Beispiel 2**

**Erdölförderung**

In einem Praxisversuch wurde auf dem Erdölvorkommen Juzhno-Balykskoje bei Neftejugansk das Wacker-Produkt Extrakt 700 in die erdöltragende Schicht $AS_{5-6}$ über insgesamt 4 Injektionssonden eingepumpt. Gefördert wurde über 20 Fördersonden.

Hierzu wurden 13,5 t einer 1:40-Verdünnung von Extrakt 700 innerhalb von 4 Tagen in die 4 Druckbohrungen eingepumpt. Die Gesamtmenge der Extrakt 700-Verdünnung betrug somit 540 $m^3$. Danach wurde weiterhin Wasser in die Druckbohrungen eingeleitet. Die zusätzliche Förderung betrug innerhalb von 8 Monaten 13400 t Rohöl, d.h. es konnten bislang zusätzlich 1140 t Rohöl/t Extrakt 700 gewonnen werden.

**Patentansprüche**

1. Verfahren zur Förderung von Erdöl aus erdölhaltigen Lagerstätten, bei dem eine Emulsion, enthaltend die Komponenten

   A) 100 Gewichtsteile Organopolysiloxan
   B) 10 bis 100 Gewichtsteile Tensid,
   C) Wasser und gegebenenfalls

D) bis zu 20 Gewichtsteile Füllstoff, der ausgewählt wird aus hydrophilen und hydrophoben Oxiden von Silicium, Magnesium oder Zink, Salzen von Elementen der II. oder III. Gruppe des Periodensystems nach Mendelejeff mit einer Ordnungszahl von 12 bis 30 mit 12 bis 22 Kohlenstoffatome je Molekül aufweisenden, aliphatischen einbasigen Carbonsäuren oder Hydroxycarbonsäuren, Lithiumstearat, Magnesiumsilikat und Magnesiumaluminiumsilikat eingesetzt wird,

wobei die Anwesenheit von Polyacrylamid und Carboxymethylcellulose ausgeschlossen ist.

**2.** Verfahren nach Anspruch 1, bei dem das Organopolysiloxan (A) aus Einheiten der allgemeinen Formeln (I) bis (VII)

$$R_3SiO_{1/2} \quad (I),$$

$$R_2SiO \quad (II),$$

$$RSiO_{3/2} \quad (III),$$

$$SiO_{4/2} \quad (IV),$$

$$R_2(R'O)SiO_{1/2} \quad (V),$$

$$R(R'O)SiO \quad (VI),$$

$$R'OSiO_{3/2} \quad (VII),$$

aufgebaut ist, worin

**R** einwertige, gegebenenfalls mit Halogenatomen, Cyano-, Amino-, Alkylamino-, quarternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 18 Kohlenstoffatomen und

**R'** einwertige, gegebenenfalls mit Halogenatomen, Cyanogruppen oder Polyoxyalkylengruppen substituierte Kohlenwasserstoffreste mit 1 bis 30 Kohlenstoffatomen und Wasserstoffatome bedeuten.

**3.** Verfahren nach Anspruch 1 oder 2, bei dem als Tenside Alkylsulfate, Sulfonate, Alkylpolyglycolether, Alkylarylpolyglycolether, Ethylenoxid/Propylenoxid-Blockcopolymere eingesetzt werden.

**4.** Verfahren nach Anspruch 1 bis 3, bei dem auf 100 Gewichtsteile Organopolysiloxan (A) 30 bis 80 Gewichtsteile Tensid (B) eingesetzt werden.

## Claims

**1.** Process for the extraction of crude oil from crude oil-containing deposits,
in which an emulsion containing the components

A) 100 parts by weight of organopolysiloxane
B) 10 to 100 parts by weight of surfactant
C) water, and if appropriate
D) up to 20 parts by weight of filler which is selected from the group consisting of hydrophilic and hydrophobic oxides of silicon, magnesium or zinc, salts of elements of group II or group III of the Periodic Table of the Elements according to Mendelejeff of an atomic number from 12 to 30 having from 12 to 22 carbon atoms per

molecule, aliphatic monobasic carboxylic acids or hydroxycarboxylic acids, lithium stearate, magnesium silicate and magnesium aluminosilicate is used,

the presence of polyacrylamide and carboxylmethylcellulose being excluded.

2. Process according to Claim 1 in which the organopolysiloxane (A) is made up of units of the general formulae (I) to (VII)

$$R_3SiO_{1/2} \quad (I),$$

$$R_2SiO \quad (II),$$

$$RSiO_{3/2} \quad (III),$$

$$SiO_{4/2} \quad (IV),$$

$$R_2(R'O)SiO_{1/2} \quad (V),$$

$$R(R'O)SiO \quad (VI),$$

$$R'OSiO_{3/2} \quad (VII),$$

in which

R denotes monovalent hydrocarbon radicals having 1 to 18 carbon atoms, the hydrocarbon radicals being unsubstituted or substituted by halogen atoms, cyano, amino, alkylamino, quaternary ammonium, mercapto, epoxy, anhydrido, carboxylato, sulphonato, sulphato, phosphonato, isocyanato or polyoxyalkylene groups,
R' denotes monovalent hydrocarbon radicals having 1 to 30 carbon atoms and hydrogen atoms, the hydrocarbon radicals being unsubstituted or substituted by halogen atoms, cyano groups or polyoxyalkylene groups.

3. Process according to Claim 1 or 2, in which the surfactants used are alkyl sulphates, sulphonates, alkyl polyglycol ethers, alkylaryl polyglycol ethers, ethylene oxide/propylene oxide block copolymers.

4. Process according to Claims 1 to 3, in which 30 to 80 parts by weight of surfactant (B) are used per 100 parts by weight of organopolysiloxane (A).

**Revendications**

1. Procédé d'extraction du pétrole de gisements pétrolifères, lors duquel l'on utilise une émulsion, contenant les composants

A) 100 parts en poids d'organopolysiloxane,
B) de 10 à 100 parts en poids d'agent tensioactif,
C) de l'eau et, le cas échéant,
D) jusqu'à 20 parts en poids d'une charge, qui est choisie parmi les oxydes hydrophiles et hydrophobes du silicium, du magnésium ou du zinc, des sels des éléments du groupe II ou du groupe III du système périodique selon Mendéléev, ayant un numéro atomique de 12 à 30, avec des acides carboxyliques ou des acides hydroxycarboxyliques univalents aliphatiques, présentant de 12 à 22 atomes de carbone par molécule, du stéarate de lithium, du silicate de magnésium et du silicate de magnésium-aluminium, la présence de polyacrylamide et carboxyméthylcellulose étant exclue.

**2.** Procédé selon la revendication 1, lors duquel l'organopolysiloxane (A) est constitué d'unités des formules générales (I) à (VII)

$$R_3SiO_{1/2} \quad (I),$$

$$R_2SiO \quad (II),$$

$$RSiO_{3/2} \quad (III),$$

$$SiO_{4/2} \quad (IV),$$

$$R_2(R'O)SiO_{1/2} \quad (V),$$

$$R(R'O)SiO \quad (VI),$$

$$R'OSiO_{3/2} \quad (VII),$$

où

R représente des résidus d'hydrocarbure univalents, substitués, le cas échéant, avec des atomes d'halogène, des groupements cyano, amino, alkylamino, ammonium quaternaire, mercapto, époxyde, anhydride, carboxylate, sulfonate, sulfate, phosphonate, isocyanate ou polyoxyalkylène, ayant de 1 à 18 atomes de carbone, et

R' représente des résidus d'hydrocarbure univalents, substitués, le cas échéant, avec des atomes d'halogène, des groupements cyano ou des groupements polyoxyalkylène, ayant de 1 à 30 atomes de carbone, et des atomes d'hydrogène.

**3.** Procédé selon la revendication 1 ou 2, lors duquel l'on utilise en tant qu'agents tensioactifs, des sulfates alkyles, des sulfonates, des éthers polyglycoliques alkyles, des éthers polyglycoliques alkylaryles, des copolymères séquencés oxyde d'éthylène/oxyde de propylène.

**4.** Procédé selon la revendication 1 à 3, lors duquel l'on utilise, pour 100 parts en poids d'organopolysiloxane (A), de 30 à 80 parts en poids d'agent tensioactif (B).